(19) Europäisches Patentamt
European Patent Office
Office européen des brevets

(11) EP 4 773 364 A1

(12) **EUROPEAN PATENT APPLICATION**
published in accordance with Art. 153(4) EPC

(43) Date of publication:
**08.07.2026 Bulletin 2026/28**

(21) Application number: **24858039.1**

(22) Date of filing: **04.07.2024**

(51) International Patent Classification (IPC):
***H01M 50/184*** *(2021.01)* ***H01M 50/186*** *(2021.01)*
***H01M 50/531*** *(2021.01)* ***H01M 10/0567*** *(2010.01)*
***H01M 10/0525*** *(2010.01)* ***H01M 10/42*** *(2006.01)*

(52) Cooperative Patent Classification (CPC):
**H01M 10/0525; H01M 10/0567; H01M 10/42; H01M 50/184; H01M 50/186; H01M 50/531;**
Y02E 60/10

(86) International application number:
**PCT/CN2024/103543**

(87) International publication number:
**WO 2025/044495 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.09.2023 CN 202311125229**

(71) Applicant: **Ningde Amperex Technology Limited**
**Ningde, Fujian 352100 (CN)**

(72) Inventors:
- **CAI, Xin**
  **Ningde, Fujian 352100 (CN)**
- **LIU, Jian**
  **Ningde, Fujian 352100 (CN)**
- **ZHENG, Xiangling**
  **Ningde, Fujian 352100 (CN)**
- **TANG, Chao**
  **Ningde, Fujian 352100 (CN)**

(74) Representative: **Kraus & Lederer PartGmbB**
**Thomas-Wimmer-Ring 15**
**80539 München (DE)**

(54) **ELECTROCHEMICAL DEVICE AND ELECTRONIC DEVICE**

(57) An electrochemical device (100) and an electronic device are provided. The electrochemical device (100) includes an electrode assembly (10) and an electrolyte, where the electrode assembly (10) includes an electrode tab (20), and an electrode tab sealant (30) is provided on the electrode tab (20). In a direction perpendicular to an extension direction of the electrode tab (20), a width of the electrode tab sealant (30) exceeds a maximum width of the electrode tab (20) by A mm, where $1.8 \leq A \leq 2.6$. The electrolyte includes a linear ester, where based on a mass of the electrolyte, a mass percentage of the linear ester is B%, with A/B meeting $0.0215 \leq A/B \leq 0.058$. The inclusion of the linear ester in the electrolyte, along with controlling the values of A and A/B within the above ranges, can address the issue of high solubility of the electrode tab (20) sealant caused by high content of the linear ester, reduce the content of impurity in the electrolyte, facilitate the transport of ions in the electrolyte, and reduce side reactions in the electrolyte, thereby improving the cycling performance and rate performance of the electrochemical device (100).

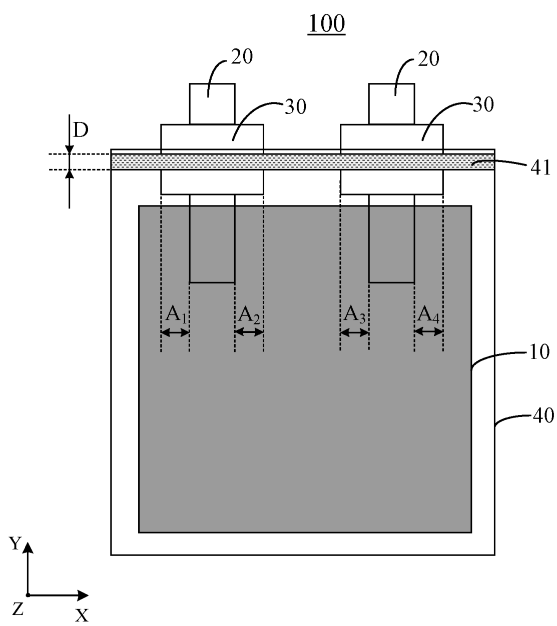


FIG. 1



Processed by Luminess, 75001 PARIS (FR)

## Description

This application claims priority to the Chinese patent application filed with the China National Intellectual Property Administration on September 1, 2023, with application No. 202311125229.3, and entitled "ELECTROCHEMICAL DEVICE AND ELECTRONIC DEVICE," which is incorporated herein by reference in its entirety.

## TECHNICAL FIELD

This application relates to the field of electrochemistry, and in particular to an electrochemical device and an electronic device.

## BACKGROUND

Electrochemical devices, such as lithium-ion batteries, have advantages such as high energy storage density, high open-circuit voltage, low self-discharge rate, long cycle life, and good safety. They are widely used as power sources in electronic products such as cameras, mobile phones, drones, laptops, and smartwatches.

With the expanding application range of lithium-ion batteries, the market has imposed higher requirements on the lithium-ion batteries, such as excellent cycling performance. Therefore, developing lithium-ion batteries with improved cycling performance has become an urgent technical challenge for those skilled in the art.

## SUMMARY

An objective of this application is to provide an electrochemical device and an electronic device to improve the cycling performance of the electrochemical device. The specific technical solutions are as follows:

A first aspect of this application provides an electrochemical device, including an electrode assembly, an electrode tab, and an electrolyte. An electrode tab sealant is provided on the electrode tab, where in a direction perpendicular to an extension direction of the electrode tab, a width of the electrode tab sealant exceeds a maximum width of the electrode tab by A mm, where $1.8 \leq A \leq 2.6$. The electrolyte includes a linear ester, where based on a mass of the electrolyte, a mass percentage of the linear ester is B%, with A/B meeting $0.0215 \leq A/B \leq 0.058$. The inclusion of the linear ester in the electrolyte, along with controlling the values of A and A/B within the above ranges, can address the issue of high solubility of the electrode tab sealant caused by high content of the linear ester, reduce the content of impurity in the electrolyte, facilitate the transport of ions (for example, lithium ions) in the electrolyte, and reduce side reactions in the electrolyte, thereby improving the cycling performance and rate performance of the electrochemical device.

In some embodiments of this application, $0.03 \leq A/B \leq 0.05$. By controlling the value of A/B within the above range, the electrochemical device can achieve excellent rate performance while maintaining better cycling performance.

In some embodiments of this application, a melting point of the electrode tab sealant is from 110°C to 250°C. By controlling the melting point of the electrode tab sealant within the above range, the electrode tab sealant can maintain a stable structure during the preparation process of the electrochemical device, reducing the dissolution amount of electrode tab sealant in the electrolyte. This can lower the content of impurity in the electrolyte, facilitate the transport of ions in the electrolyte, and reduce side reactions in the electrolyte, thereby improving the cycling performance and rate performance of the electrochemical device.

In some embodiments of this application, the electrode tab sealant includes at least one of polypropylene, polyethylene, polyethylene-propylene copolymer, polystyrene, polyvinyl chloride, acrylonitrile-butadiene-styrene copolymer, polyethylene terephthalate, or polyethylene naphthalate. Selecting materials within the above range can reduce the dissolution amount of the electrode tab sealant in the electrolyte, reduce the content of impurity in the electrolyte, facilitate the transport of ions in the electrolyte, and reduce side reactions in the electrolyte, thereby improving the cycling performance and rate performance of the electrochemical device.

In some embodiments of this application, the electrochemical device further includes a packaging pouch, where the packaging pouch has a cavity, and the electrode assembly and the electrolyte are disposed in the cavity. The packaging pouch includes a top sealing edge, where the top sealing edge is used to seal the cavity, and the electrode tab is connected to the electrode assembly and extends from the top sealing edge. Along the extension direction of the electrode tab, a sealing width of the top sealing edge is from 1.0 mm to 1.7 mm. By controlling the sealing width of the top sealing edge within the above range, the risk of electrolyte leakage caused by the dissolution of the linear ester can be reduced, thereby improving the safety performance of the electrochemical device. Additionally, it can reduce the content of impurity in the electrolyte and further improve the cycling performance and rate performance of the electrochemical device.

In some embodiments of this application, the electrochemical device meets at least one of the following characteristics: (1) $45 \leq B \leq 75$; or (2) a melting point of the electrode tab sealant is from 140°C to 200°C. The electrochemical device with the above characteristics exhibits excellent cycling performance and rate performance.

In some embodiments of this application, the linear ester includes at least one of non-fluorinated linear carbonate, non-fluorinated linear carboxylate, fluorinated linear carbonate, or fluorinated linear carboxylate. The non-fluorinated linear carbonate includes at least one of dimethyl carbonate, ethyl methyl carbonate, or diethyl carbonate. The non-fluorinated linear carboxylate includes at least one of propyl propionate, ethyl propionate, ethyl acetate, or methyl propionate. The fluorinated linear carbonate includes at least one of bis(2,2,2-trifluoroethyl) carbonate, 2,2-difluoroethyl methyl carbonate, or 1,1,1-trifluoroethyl methyl carbonate. The fluorinated linear carboxylate includes at least one of 2,2-difluoroethyl propionate or 2,2-difluoroethyl acetate. The inclusion of linear esters within the above range in the electrolyte facilitates in improving the transport capability of ions in the electrolyte, thereby further improving the cycling performance and rate performance of the electrochemical device.

In some embodiments of this application, the electrolyte further includes a compound represented by formula (I):

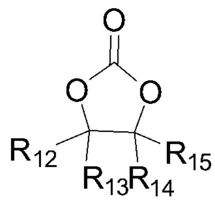

Formula (I)

where $R_{12}$, $R_{13}$, $R_{14}$, and $R_{15}$ are each independently selected from H, F, $C_1$ to $C_{10}$ fluorinated alkyl, $C_1$ to $C_{10}$ fluorinated alkoxy, or $C_1$ to $C_{10}$ fluorinated alkoxyalkyl, and $R_{12}$, $R_{13}$, $R_{14}$, and $R_{15}$ are not simultaneously hydrogen atoms. Based on the mass of the electrolyte, a mass percentage of the compound represented by formula (I) is C%, where C% is from 1% to 15%. The inclusion of the compound represented by formula (I) in the electrolyte, along with controlling the content of the compound within the above range, can adjust the solvation structure in the electrolyte, reduce the binding strength between the solvent (for example, linear ester and the compound represented by formula (I)) and ions in the electrolyte, and further improve the transport capability of ions in the electrolyte, thereby improving the cycling performance and rate performance of the electrochemical device.

In some embodiments of this application, based on the mass of the electrolyte, the mass percentage C% of the compound represented by formula (I) is from 2.5% to 8%. Controlling the content of the compound represented by formula (I) within the above range is more conducive to reducing the binding strength between the solvent and ions and improving the transport capability of ions in the electrolyte, thereby improving the cycling performance and rate performance of the electrochemical device.

In some embodiments of this application, the compound represented by formula (I) includes at least one of the following compounds:

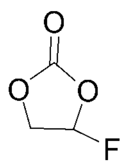

Formula (I-1)

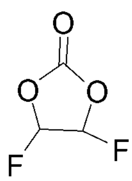

Formula (I-2)

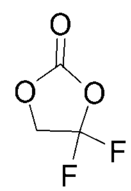

Formula (I-3)

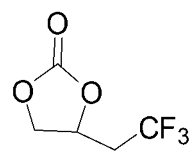

Formula (I-4)

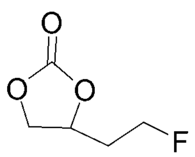

Formula (I-5)

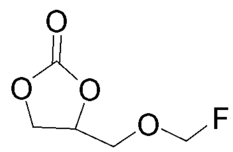

Formula (I-6)

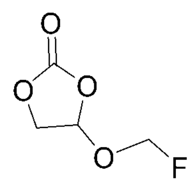

Formula (I-7).

The inclusion of the compound represented by formula (I) within the above range in the electrolyte is more conducive to reducing the binding strength between the solvent and ions and improving the transport capability of ions in the electrolyte, thereby improving the cycling performance and rate performance of the electrochemical device.

In some embodiments of this application, the electrode tab includes a positive electrode tab and a negative

electrode tab. The electrode assembly includes a positive electrode plate and a negative electrode plate. The positive electrode plate includes a positive electrode current collector, a positive electrode active material layer, and the positive electrode tab. The positive electrode active material layer is disposed on at least one surface of the positive electrode current collector, and the positive electrode active material layer is provided with a first groove exposing the positive electrode current collector. The positive electrode tab is disposed in the first groove and connected to the positive electrode current collector. Insulating tape is provided on a surface of the positive electrode tab and on a region of a surface of the positive electrode plate away from the positive electrode tab and corresponding to the first groove. The negative electrode plate includes a negative electrode current collector, a negative electrode active material layer, and the negative electrode tab. The negative electrode active material layer is disposed on at least one surface of the negative electrode current collector, and the negative electrode active material layer is provided with a second groove exposing the negative electrode current collector. The negative electrode tab is disposed in the second groove and connected to the negative electrode current collector. A region of a surface of the negative electrode plate away from the negative electrode tab and corresponding to the second groove is designated as an electrode tab protection region. Insulating tape is provided on regions of surfaces of the positive electrode plate opposite the second groove and opposite the electrode tab protection region. A melting point of the insulating tape ranges from 250°C to 600°C. By providing insulating tape in the above regions and selecting insulating tape with a melting point within the above range, as the insulating tape has excellent high-temperature stability and low thermal shrinkage, the insulating tape can maintain its integrity when adhered even under high heat generated in the electrochemical device, providing effective protection to the electrode tab and reducing the risk of internal short circuits at high temperatures, thereby improving the safety performance of the electrochemical device. Additionally, it can reduce the dissolution amount of the insulating tape in the electrolyte, reduce the content of impurity in the electrolyte, facilitate the transport of ions in the electrolyte, and reduce side reactions in the electrolyte, thereby further improving the cycling performance and rate performance of the electrochemical device.

In some embodiments of this application, the insulating tape includes a substrate layer and an adhesive layer disposed on one surface of the substrate layer. The substrate layer includes at least one of polyethylene terephthalate or polyimide. The adhesive layer includes at least one of polypropylene, polyvinyl chloride, acrylonitrile-butadiene-styrene copolymer, or polyethylene terephthalate. Insulating tape with a substrate layer and an adhesive layer made of materials within the above ranges exhibits excellent high-temperature stability and low thermal shrinkage, providing better protection to the electrode tab, further reducing the content of impurity in the electrolyte, facilitating the transport of ions in the electrolyte, and reducing side reactions in the electrolyte, thereby further improving the safety performance, cycling performance, and rate performance of the electrochemical device.

A second aspect of this application provides an electronic device, where the electronic device includes the electrochemical device according to the first aspect of this application. The electrochemical device according to this application has excellent cycling performance and rate performance, thereby resulting in a longer service life for the electronic device of this application.

Beneficial effects of this application:

This application provides an electrochemical device and an electronic device. The electrochemical device includes an electrode assembly and an electrolyte, where the electrode assembly includes an electrode tab, and an electrode tab sealant is provided on the electrode tab. In a direction perpendicular to an extension direction of the electrode tab, a width of the electrode tab sealant exceeds a maximum width of the electrode tab by A mm, where $1.8 \leq A \leq 2.6$. The electrolyte includes a linear ester, where based on a mass of the electrolyte, a mass percentage of the linear ester is B%, with A/B meeting $0.0215 \leq A/B \leq 0.058$. The inclusion of the linear ester in the electrolyte, along with controlling the values of A and A/B within the above ranges, can address the issue of high solubility of the electrode tab sealant caused by high content of the linear ester, reduce the content of impurity in the electrolyte, facilitate the transport of ions in the electrolyte, and reduce side reactions in the electrolyte, thereby improving the cycling performance and rate performance of the electrochemical device.

Certainly, implementing any product or method of this application does not necessarily require achieving all the advantages described above simultaneously.

## BRIEF DESCRIPTION OF DRAWINGS

To more clearly illustrate the technical solutions in some embodiments of this application or the prior art, the accompanying drawings required for describing these embodiments or the prior art are briefly introduced below. It is evident that the accompanying drawings described below are only some embodiments of this application, and other embodiments can be obtained by those skilled in the art based on these drawings.

FIG. 1 is a schematic structural diagram of an electrochemical device according to an embodiment of this application.
FIG. 2 is a schematic diagram of the adhesion position of insulating tape and the positive electrode tab in an embodiment of this application.

FIG. 3 is a schematic diagram of the adhesion position of insulating tape and the negative electrode tab in an embodiment of this application.

Reference signs: Electrochemical device 100; electrode assembly 10; electrode tab 20; electrode tab sealant 30; packaging pouch 40; top sealing edge 41; positive electrode tab 21; negative electrode tab 22; positive electrode plate 11; positive electrode current collector 111; first positive electrode active material layer 112a; second positive electrode active material layer 112b; first surface 111a; second surface 111b; surface 11a of positive electrode plate opposite second groove; surface 11b of positive electrode plate opposite electrode tab protection region; negative electrode plate 12; negative electrode current collector 121; first negative electrode active material layer 122a; second negative electrode active material layer 122b; third surface 121a; fourth surface 121b; surface 12a of negative electrode plate opposite first groove; surface 12b of negative electrode plate opposite region of positive electrode plate away from positive electrode tab and corresponding to first groove in positive electrode plate; first insulating tape 51; second insulating tape 52; third insulating tape 53; fourth insulating tape 54; first protective tape 61; second protective tape 62; third protective tape 63; fourth protective tape 64; first groove 71; second groove 72; third groove 73; and fourth groove 74.

## DETAILED EMBODIMENTS

The technical solutions in some embodiments of this application will be described clearly and completely below with reference to the accompanying drawings in these embodiments of this application. It is evident that the described embodiments are only some of these embodiments of this application, not all embodiments. All other embodiments obtained by those skilled in the art based on these embodiments of this application fall within the scope of protection of this application.

It should be noted that, in the specific embodiments of this application, a lithium-ion battery is used as an example of the electrochemical device to explain this application, but the electrochemical device of this application is not limited to lithium-ion batteries.

Linear esters have low viscosity, excellent ion transport properties, and low melting points. Applying an electrolyte containing linear esters to an electrochemical device can improve the kinetic performance and low-temperature performance of the electrochemical device. However, linear esters have a certain solubility for the components of the electrode tab sealant. When the content of linear esters is relatively high, their solubility in the electrode tab sealant is high, leading to an increase in the content of impurity in the electrolyte, thereby affecting the cycling performance of the electrochemical device.

In view of this, a first aspect of this application provides an electrochemical device, where the electrochemical device includes an electrode assembly, an electrode tab, and an electrolyte. An electrode tab sealant is provided on the electrode tab, where in a direction perpendicular to an extension direction of the electrode tab, a width of the electrode tab sealant exceeds a maximum width of the electrode tab by A mm, where $1.8 \leq A \leq 2.6$. The electrolyte includes a linear ester, where based on a mass of the electrolyte, a mass percentage of the linear ester is B%, with A/B meeting $0.0215 \leq A/B \leq 0.058$, preferably $0.03 \leq A/B \leq 0.05$. For example, the value of A may be 1.8, 2.0, 2.1, 2.2, 2.3, 2.4, 2.5, 2.6, or in a range composed of any two of these values. The value of A/B may be 0.0215, 0.025, 0.03, 0.035, 0.04, 0.045, 0.05, 0.055, 0.058, or in a range composed of any two of these values. When the value of A is too large, the content of impurity in the electrolyte is too high, leading to excessive side reactions in the electrolyte and hindering the transport of ions (for example, lithium ions) in the electrolyte, thus affecting the cycling performance and rate performance of the electrochemical device. When the value of A is too small, the width of the electrode tab sealant exceeding the electrode tab is insufficient to provide effective sealing, posing a risk of electrolyte leakage, thus affecting the safety performance of the electrochemical device. When the value of A/B is too large, it reduces the transport capability of ions in the electrolyte, making it impossible to improve the cycling performance and rate performance of the electrochemical device. When the value of A/B is too small, the electrode tab sealant cannot provide effective sealing, resulting in excessive dissolution amount of the electrode tab sealant, excessive side reactions in the electrolyte, and high ion transport resistance, thus affecting the safety performance of the electrochemical device and failing to improve the cycling performance and rate performance of the electrochemical device. The inclusion of the linear ester in the electrolyte, along with controlling the values of A and A/B within the above ranges, can address the issue of high solubility of the electrode tab sealant caused by high content of the linear ester, reduce the content of impurity in the electrolyte, facilitate the reduction of side reactions in the electrolyte, and improve the transport capability of ions (for example, lithium ions) in the electrolyte, thereby improving the cycling performance and rate performance of the electrochemical device.

In FIG. 1 to FIG. 3, for ease of understanding, a three-dimensional rectangular coordinate system is established with a length direction of the electrode assembly 10 as direction X, a width direction of the electrode assembly 10 as direction Y, and a thickness direction of the electrode assembly 10 as direction Z. It can be understood that the electrode tab extends along direction Y, the thickness direction of the electrode tab is direction Z, and direction X is perpendicular to the plane formed by directions Y and Z. The electrochemical device 100 includes an electrode assembly 10 and an electrode

tab 20, where the electrode tab 20 is provided with an electrode tab sealant 30. Along direction X, that is, in a plane formed by directions X and Y perpendicular to an extension direction of the electrode tab 20, a width of the electrode tab sealant 30 exceeds a maximum width of the electrode tab 20 by A mm. Typically, the electrochemical device 100 includes two electrode tabs 20, where each of the two electrode tabs 20 is provided with an electrode tab sealant 30. Along direction X, a width of the electrode tab sealant 30 is greater than a width of the electrode tab 20, and the electrode tab sealant 30 extends beyond two sides of the electrode tab 20. The widths by which the two electrode tab sealants 30 exceed the two sides of the electrode tabs 20 are respectively $A_1$, $A_2$, $A_3$, and $A_4$, which may be the same or different. When they are the same, $A = A_1 = A_2 = A_3 = A_4$. When they are different, A is the maximum value among them, for example, if $A_1 < A_2 < A_3 < A_4$, $A = A_4$. This application does not specifically limit the size of the electrode tab, as long as it achieves the objective of this application. For example, a width of the electrode tab along direction X may be from 3 mm to 8 mm, a length of the electrode tab along direction Y may be from 30 mm to 45 mm, and a thickness of the electrode tab along direction Z may be from 0.2 μm to 0.6 μm. This application does not specifically limit the size of the electrode tab sealant, as long as it achieves the objective of this application. For example, a width of the electrode tab sealant along direction X may be from 6 mm to 13.2 mm, a length of the electrode tab sealant along direction Y may be from 7 mm to 13 mm, and a thickness of the electrode tab sealant along direction Z may be from 75 μm to 85 μm.

In some embodiments of this application, a melting point of the electrode tab sealant is from 110°C to 250°C, preferably from 140°C to 200°C. For example, the melting point of the electrode tab sealant may be 110°C, 120°C, 130°C, 140°C, 145°C, 150°C, 160°C, 180°C, 200°C, 220°C, 250°C, or in a range composed of any two of these values. By controlling the melting point of the electrode tab sealant within the above range, the electrode tab sealant can maintain a stable structure during the preparation process of the electrochemical device, reduce the dissolution amount of electrode tab sealant in the electrolyte, reduce the content of impurity in the electrolyte, facilitate the transport of ions in the electrolyte, and reduce side reactions in the electrolyte, thereby improving the cycling performance and rate performance of the electrochemical device.

In some embodiments of this application, the electrode tab sealant includes at least one of polypropylene, polyethylene, polyethylene-propylene copolymer, polystyrene, polyvinyl chloride, acrylonitrile-butadiene-styrene copolymer, polyethylene terephthalate, or polyethylene naphthalate. Selecting materials within the above range can reduce the dissolution amount of the electrode tab sealant in the electrolyte, reduce the content of impurity in the electrolyte, facilitate the transport of ions in the electrolyte, and reduce side reactions in the electrolyte, thereby improving the cycling performance and rate performance of the electrochemical device.

In this application, the melting point of the electrode tab sealant can be controlled by varying the type of material used for the electrode tab sealant. Selecting different materials within the above range can ensure that the melting point of the electrode tab sealant falls within the range of this application. For example, when the electrode tab sealant includes polyethylene, its melting point is 110°C; when the electrode tab sealant includes polystyrene, its melting point is 120°C; when the electrode tab sealant includes polypropylene, its melting point is 150°C; when the electrode tab sealant includes polyvinyl chloride, its melting point is 180°C; when the electrode tab sealant includes acrylonitrile-butadiene-styrene copolymer, its melting point is 200°C; and when the electrode tab sealant includes polyethylene terephthalate, its melting point is 250°C.

In some embodiments of this application, as shown in FIG. 1, the electrochemical device 100 further includes a packaging pouch 40, where the packaging pouch 40 has a cavity (not shown in FIG. 1), and the electrode assembly 10 and the electrolyte (not shown in FIG. 1) are disposed in the cavity. The packaging pouch 40 includes a top sealing edge 41, where the top sealing edge 41 is used to seal the cavity, and the electrode tab 20 is connected to the electrode assembly 10 and extends from the top sealing edge 41. Along the extension direction of the electrode tab 20 (direction Y), a sealing width of the top sealing edge 41 is D, where D is from 1.0 mm to 1.7 mm. For example, the sealing width of the top sealing edge may be 1.0 mm, 1.1 mm, 1.2 mm, 1.3 mm, 1.4 mm, 1.5 mm, 1.6 mm, 1.7 mm, or in a range composed of any two of these values. Since the linear ester in the electrolyte has solubility for the packaging pouch (for example, an aluminum-plastic film pouch), a relatively narrow sealing width of the top sealing edge increases the risk of electrolyte leakage during storage of the electrochemical device, while a relatively wide sealing width increases the content of impurity in the electrolyte. By controlling the sealing width of the top sealing edge within the above range, the risk of electrolyte leakage caused by the dissolution of the linear ester can be reduced, thereby improving the safety performance of the electrochemical device. Additionally, it can reduce the content of impurity in the electrolyte and further improve the cycling performance and rate performance of the electrochemical device.

Typically, the sealing width of the top sealing edge is controlled by adjusting the embossing width during the sealing of the packaging pouch. In this application, the packaging pouch is used to accommodate the electrode assembly, the electrolyte, and other components known in the field of electrochemical devices, with no specific limitations on these other components in this application. The packaging pouch of this application may include, but is not limited to, an aluminum-plastic film pouch. The packaging pouch may further include a side sealing edge, and this application does not specifically limit a sealing width of the side sealing edge, as long as it achieves the objective of this application. For example, the sealing width of the side sealing edge may be from 1 mm to 3 mm.

In some embodiments of this application, $45 \leq B \leq 75$. For example, the value of B may be 45, 48, 50, 52, 55, 58, 60, 63, 65, 70, 75, or in a range composed of any two of these values. Controlling the mass percentage B% of the linear ester within the above range can adjust the solvation structure, reduce the viscosity of the electrolyte and the bulk impedance of the electrolyte, improve the transport capability of ions in the electrolyte, and also facilitate reducing the impedance of solid electrolyte interface films on surfaces of the positive electrode plate and negative electrode plate, thereby further improving the cycling performance and rate performance of the electrochemical device.

In some embodiments of this application, the linear ester includes at least one of non-fluorinated linear carbonate, non-fluorinated linear carboxylate, fluorinated linear carbonate, or fluorinated linear carboxylate. The non-fluorinated linear carbonate includes at least one of dimethyl carbonate, ethyl methyl carbonate, or diethyl carbonate. The non-fluorinated linear carboxylate includes at least one of propyl propionate, ethyl propionate, ethyl acetate, or methyl propionate. The fluorinated linear carbonate includes at least one of bis(2,2,2-trifluoroethyl) carbonate, 2,2-difluoroethyl methyl carbonate, or 1,1,1-trifluoroethyl methyl carbonate. The fluorinated linear carboxylate includes at least one of 2,2-difluoroethyl propionate or 2,2-difluoroethyl acetate. The inclusion of linear esters within the above range in the electrolyte facilitates reducing the viscosity and bulk impedance of the electrolyte and improving the transport capability of ions in the electrolyte, thereby further improving the cycling performance and rate performance of the electrochemical device.

In some embodiments of this application, the electrolyte further includes a compound represented by formula (I):

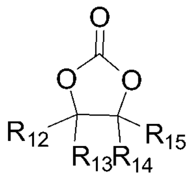

Formula (I)

where $R_{12}$, $R_{13}$, $R_{14}$, and $R_{15}$ are each independently selected from H, F, $C_1$ to $C_{10}$ fluorinated alkyl, $C_1$ to $C_{10}$ fluorinated alkoxy, or $C_1$ to $C_{10}$ fluorinated alkoxyalkyl, and $R_{12}$, $R_{13}$, $R_{14}$, and $R_{15}$ are not simultaneously hydrogen atoms. Based on the mass of the electrolyte, a mass percentage C% of the compound represented by formula (I) is from 1% to 15%, preferably from 2.5% to 8%. For example, the value of C may be 1, 2.5, 3, 4, 5, 6, 7, 8, 9, 10, 11, 12, 13, 14, 15, or in a range composed of any two of these values. The inclusion of the compound represented by formula (I) in the electrolyte, along with controlling the content of the compound within the above range, can adjust the solvation structure in the electrolyte, reduce the binding strength between the solvent (for example, linear ester and the compound represented by formula (I)) and ions in the electrolyte, and further improve the transport capability of ions in the electrolyte, thereby improving the cycling performance and rate performance of the electrochemical device.

In some embodiments of this application, the compound represented by formula (I) includes at least one of the following compounds:

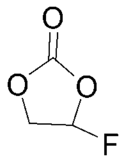
Formula (I-1)

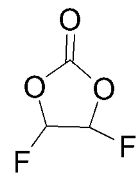
Formula (I-2)

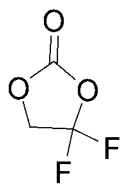
Formula (I-3)

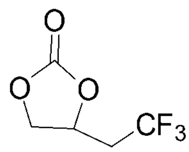
Formula (I-4)

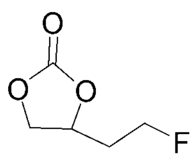
Formula (I-5)

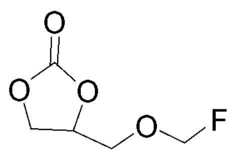
Formula (I-6)

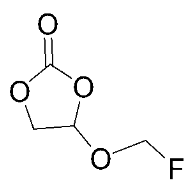
Formula (I-7).

The inclusion of the compound represented by formula (I) within the above range in the electrolyte is more conducive to reducing the binding strength between the solvent and ions and improving the transport capability of ions in the electrolyte, thereby improving the cycling performance and rate performance of the electrochemical device.

In some embodiments of this application, the electrode tab includes a positive electrode tab and a negative electrode tab. The electrode assembly includes a positive electrode plate and a negative electrode plate. The positive electrode plate includes a positive electrode current collector and a positive electrode active material layer disposed on at least one surface of the positive electrode current collector. The positive electrode active material layer is provided with a first groove exposing the positive electrode current collector, and the positive electrode tab is disposed in the first groove and connected to the positive electrode current collector. Insulating tape is provided on a surface of the positive electrode tab and on a region of a surface of the positive electrode plate away from the positive electrode tab and corresponding to the first groove. The negative electrode plate includes a negative electrode current collector and a negative electrode active material layer disposed on at least one surface of the negative electrode current collector. The negative electrode active material layer is provided with a second groove exposing the negative electrode current collector, and the negative electrode tab is disposed in the second groove and connected to the negative electrode current collector. A region of a surface of the negative electrode plate away from the negative electrode tab and corresponding to the second groove is designated as an electrode tab protection region. Insulating tape is provided on regions of surfaces of the positive electrode plate opposite the second groove and opposite the electrode tab protection region. A melting point of the insulating tape ranges from 250°C to 600°C. For example, the melting point of the insulating tape may be 250°C, 300°C, 350°C, 400°C, 450°C, 500°C, 550°C, 600°C, or in a range composed of any two of these values. By providing insulating tape in the above regions and selecting insulating tape with a melting point within the above range, as the insulating tape has excellent high-temperature stability and low thermal shrinkage, the insulating tape can maintain its integrity when adhered even under high heat generated in the electrochemical device, providing effective protection to the electrode tab and reducing the risk of internal short circuits at high temperatures, thereby improving the safety performance of the electrochemical device. Additionally, it can reduce the dissolution amount of the insulating tape in the electrolyte, reduce the content of impurity in the electrolyte, facilitate the transport of ions in the electrolyte, and reduce side reactions in the electrolyte, thereby further improving the cycling performance and rate performance of the electrochemical device.

As shown in FIG. 2 and FIG. 3, it can be understood a length direction of the electrode assembly corresponds to a length direction of the positive electrode plate, a width direction of the electrode assembly corresponds to a width direction of the positive electrode plate, and a thickness direction of the electrode assembly corresponds to a thickness direction of the positive electrode plate, that is, the length direction of the positive electrode plate is direction X, the width direction of the positive electrode plate is direction Y, and the thickness direction of the positive electrode plate is direction Z. It can be understood that the positive electrode current collector 111, the first positive electrode active material layer 112a, the second positive electrode active material layer 112b, the negative electrode plate 12, the negative electrode current collector 121, the first negative electrode active material layer 122a, and the second negative electrode active material layer 122b each have the same length, width, and thickness directions as the positive electrode plate. The "positive electrode active material layer disposed on at least one surface of the positive electrode current collector" means that the positive electrode active material layer is disposed on one or two surfaces of the positive electrode current collector, where the "surface" may be a portion of the surface of the positive electrode current collector or may be the entirety of the surface of the positive electrode current collector. For example, in some embodiments, as shown in FIG. 2, the positive electrode current collector 111 includes a first surface 111a and a second surface 111b, and the positive electrode active material layer is disposed on two surfaces of the positive electrode current collector 111, that is, the first positive electrode active material layer 112a on the first surface 111a and the second positive electrode active material layer 112b on the second surface 111b. In some other embodiments, the positive electrode active material layer is disposed on one surface of the positive electrode current collector, which may be the first surface or the second surface. The "negative electrode active material layer disposed on at least one surface of the negative electrode current collector" means that the negative electrode active material layer is disposed on one or two surfaces of the negative electrode current collector, where the "surface" may be a portion of the surface of the negative electrode current collector or may be the entirety of the surface of the negative electrode current collector. For example, in some embodiments, as shown in FIG. 3, the negative electrode current collector 121 includes a third surface 121a and a fourth surface 121b, and the negative electrode active material layer is disposed on two surfaces of the negative electrode current collector 121, that is, the first negative electrode active material layer 122a on the third surface 121a and the second negative electrode active material layer 122b on the fourth surface 121b. In some other embodiments, the negative electrode active material layer is disposed on one surface of the negative electrode current collector, which may be the third surface or the fourth surface.

It should be noted that the term "opposite" is based on the relative positional relationship between the surface of the positive electrode plate and the second groove, where the "region of the surface of the positive electrode plate opposite the second groove" refers to a region of a surface of the positive electrode plate close to the second groove and corresponding to a position of the second groove. It should be noted that the positive electrode plate in the "region of the surface of the positive electrode plate opposite the second groove" and the positive electrode plate in the "region of the surface of the positive electrode plate opposite the electrode tab protection region" are not the same layer of the positive electrode plate but are two layers of positive electrode plates adjacent to the negative electrode plate.

As shown in FIG. 2, the positive electrode plate 11 includes a positive electrode current collector 111, where the

positive electrode current collector 111 includes a first surface 111a and a second surface 111b. The positive electrode plate 11 further includes a first positive electrode active material layer 112a disposed on the first surface 111a and a second positive electrode active material layer 112b disposed on the second surface 111b. The first positive electrode active material layer 112a is provided with a first groove 71 exposing the first surface 111a of the positive electrode current collector 111. The positive electrode tab 21 is disposed in the first groove 71 and connected to the first surface 111a of the positive electrode current collector 111. Insulating tape is provided on a surface of the positive electrode tab 21 and on a region of a surface of the positive electrode plate 11 away from the positive electrode tab 21 and corresponding to the first groove 71. The "insulating tape provided on a surface of the positive electrode tab 21 and on a region of a surface of the positive electrode plate 11 away from the positive electrode tab 21 and corresponding to the first groove 71" means that a first insulating tape 51 is provided on the surface of the positive electrode tab 21, and that a second insulating tape 52 is provided on the region of the surface of the positive electrode plate 11 away from the positive electrode tab 21 and corresponding to the first groove 71. It can be understood that the "first insulating tape 51 provided on the surface of the positive electrode tab 21" means that the first insulating tape 51 may be partially disposed on the surface of the first positive electrode active material layer 112a and partially disposed on the surface of the positive electrode tab 21, such that the first insulating tape 51 can cover the positive electrode tab 21 when disposed on the surface of the positive electrode tab 21. The "second insulating tape 52 provided on the region of the surface of the positive electrode plate 11 away from the positive electrode tab 21 and corresponding to the first groove 71" means that the second insulating tape 52 is disposed on the region of the surface of the positive electrode plate 11 away from the positive electrode tab 21 and corresponding to the first groove 71. In some embodiments, the second positive electrode active material layer 112b is provided with a third groove 73 exposing the second surface 111b of the positive electrode current collector 111, and an orthographic projection of the third groove 73 on the positive electrode current collector 111 completely overlaps with the first groove 71. The second insulating tape 52 may be partially located on the surface of the second positive electrode active material layer 112b and partially cover the third groove 73, such that along direction Z', an orthographic projection of the second insulating tape 52 on the positive electrode current collector 111 completely or partially overlaps with that of the first insulating tape 51.

In some embodiments, as shown in FIG. 2, a first protective tape 61 may be provided on the surface 12a of the negative electrode plate 12 opposite the first groove 71, and a second protective tape 62 may be provided on the surface 12b of the negative electrode plate 12 opposite the region of the surface of the positive electrode plate 11 away from the positive electrode tab 21 and corresponding to the first groove 71. The "first protective tape 61 provided on the surface 12a of the negative electrode plate 12 opposite the first groove 71" means that the first protective tape 61 is disposed on the surface 12a of the second negative electrode active material layer 122a adjacent to the first positive electrode active material layer 112a and opposite the first groove 71. Along direction Z, an orthographic projection of the first protective tape 61 on the positive electrode current collector 111 completely or partially overlaps with that of the first insulating tape 51. The "second protective tape 62 provided on the surface 12b of the negative electrode plate 12 opposite the region of the surface of the positive electrode plate 11 away from the positive electrode tab 21 and corresponding to the first groove 71" means that the second protective tape 62 is disposed on the surface 12b of the negative electrode plate opposite the region of the surface of the positive electrode plate 11 away from the positive electrode tab 21 and corresponding to the first groove 71. Along direction Z, an orthographic projection of the second protective tape 62 on the positive electrode current collector 111 completely or partially overlaps with that of the second insulating tape 52.

As shown in FIG. 3, the negative electrode plate 12 includes a negative electrode current collector 121, where the negative electrode current collector 121 includes a third surface 121a and a fourth surface 121b. The negative electrode plate 12 further includes a first negative electrode active material layer 122a disposed on the third surface 121a and a second negative electrode active material layer 122b disposed on the fourth surface 121b. The first negative electrode active material layer 122a is provided with a second groove 72 exposing the third surface 121a of the negative electrode current collector 121. The negative electrode tab 22 is disposed in the second groove 72 and connected to the third surface 121a of the negative electrode current collector 121. A region of a surface of the negative electrode plate 12 away from the negative electrode tab 22 and corresponding to the second groove 72 is designated as an electrode tab protection region. Insulating tape is provided on regions of surfaces of the positive electrode plate 11 opposite the second groove 72 and opposite the electrode tab protection region. The "insulating tape provided on regions of surfaces of the positive electrode plate 11 opposite the second groove 72 and opposite the electrode tab protection region" means that a third insulating tape 53 is provided on the surface 11a of the positive electrode plate 11 opposite the second groove 72, that a region of a surface of the negative electrode sheet 12 far from the negative electrode tab 22 and corresponding to the second groove 72 is defined as a tab protection region, and that a fourth insulating tape 54 is provided on the surface 11b of the positive electrode plate 11 opposite the electrode tab protection region. It can be understood that the "third insulating tape 53 provided on the surface 11a of the positive electrode plate 11 opposite the second groove 72" means that the third insulating tape 53 is disposed on a surface 11a of the first positive electrode active material 112a adjacent to the first negative electrode active material layer 122a and opposite the second groove 72. Along direction Z, an orthographic projection of the third insulating tape 53 on the negative electrode current collector 121 can completely cover the negative electrode tab 22. The "fourth insulating tape 54 provided on the surface 11b of the positive electrode plate 11 opposite the

electrode tab protection region" means that the fourth insulating tape 54 is disposed on a surface 11b of the second positive electrode active material 112b adjacent to the second negative electrode active material layer 122b and opposite the electrode tab protection region. Along direction Z, an orthographic projection of the fourth insulating tape 54 on the negative electrode current collector 121 completely or partially overlaps with that of the third insulating tape 53.

In some embodiments, as shown in FIG. 3, the second negative electrode active material layer 122b is provided with a fourth groove 74 exposing the fourth surface 121b of the negative electrode current collector 121, and an orthographic projection of the fourth groove 74 on the negative electrode current collector 121 completely overlaps with the second groove 72. In some embodiments, protective tape may alternatively be provided on a surface of the negative electrode tab 22 and on a region of a surface of the negative electrode plate 12 away from the negative electrode tab 22 and corresponding to the second groove 72. The "protective tape provided on a surface of the negative electrode tab 22 and on a region of a surface of the negative electrode plate 12 away from the negative electrode tab 22 and corresponding to the second groove 72" means that a third protective tape 63 is provided on the surface of the negative electrode tab 22, and that a fourth protective tape 64 is provided on the region of the surface of the negative electrode plate 12 away from the negative electrode tab 22 and corresponding to the second groove 72. It can be understood that the "third protective tape 63 provided on the surface of the negative electrode tab 22" means that the third protective tape 63 may be partially disposed on the surface of the first negative electrode active material layer 122a and partially disposed on the surface of the negative electrode tab 22, such that the third protective tape 63 can cover the negative electrode tab 22 when disposed on the surface of the negative electrode tab 22. The "fourth protective tape 64 provided on the region of the surface of the negative electrode plate 12 away from the negative electrode tab 22 and corresponding to the second groove 72" means that the fourth protective tape 64 is disposed on the region of the surface of the negative electrode plate 12 away from the negative electrode tab 22 and corresponding to the second groove 72. The fourth protective tape 64 may be partially disposed on the surface of the second negative electrode active material layer 122b and partially disposed on the fourth groove 74 opposite the second groove 72, such that along direction Z, an orthographic projection of the fourth protective tape 64 on the negative electrode current collector 121 completely or partially overlaps with that of the third protective tape 63.

The insulating tape of this application includes the first insulating tape 51, the second insulating tape 52, the third insulating tape 53, and the fourth insulating tape 54, as shown in FIG. 2 and FIG. 3. The protective tape of this application includes the first protective tape 61, the second protective tape 62, the third protective tape 63, and the fourth protective tape 64, as shown in FIG. 2 and FIG. 3. The materials of the protective tape and the insulating tape may be the same or may be different, and this application does not impose specific restrictions thereon, as long as it achieves the objective of this application.

In some embodiments of this application, the insulating tape includes a substrate layer and an adhesive layer disposed on one surface of the substrate layer. The substrate layer includes at least one of polyethylene terephthalate or polyimide. The adhesive layer includes at least one of polypropylene, polyvinyl chloride, acrylonitrile-butadiene-styrene copolymer, or polyethylene terephthalate. Insulating tape with a substrate layer and an adhesive layer made of materials within the above ranges exhibits excellent high-temperature stability and low thermal shrinkage, providing better protection to the electrode tab, further reducing the content of impurity in the electrolyte, facilitating the transport of ions in the electrolyte, and reducing side reactions in the electrolyte, thereby further improving the safety performance, cycling performance, and rate performance of the electrochemical device.

In this application, the melting point of the insulating tape can be controlled by varying the type of material used for the substrate layer. Selecting different materials for the substrate layer within the above range can ensure that the melting point of the insulating tape falls within the range of this application. For example, when the substrate layer includes polyethylene terephthalate, its melting point is 250°C; and when the substrate layer includes polyimide, its melting point is 500°C. This application does not impose specific restrictions on the size of the insulating tape, as long as it achieves the objective of this application. For example, the size of the insulating tape along direction X may be from 9 mm to 20 mm, along direction Y may be from 20 mm to 35 mm, and along direction Z may be from 55 $\mu$m to 100 $\mu$m.

The electrolyte of this application further includes a lithium salt. The lithium salt may include, but is not limited to, at least one of lithium hexafluorophosphate, lithium bis(fluorosulfonyl)imide, lithium bis(trifluoromethanesulfonyl)imide, lithium bis(oxalate)borate, lithium difluoro(oxalate)borate, lithium difluorophosphate, lithium tetrafluoroborate, lithium nitrate, lithium hexafluoroantimonate, lithium hexafluoroarsenate, lithium bis(trifluoromethylsulfonyl)imide, lithium bis(pentafluoroethylsulfonyl)imide, lithium tris(trifluoromethylsulfonyl)methide, lithium difluoro(oxalate)phosphate, or lithium tetrafluoro(oxalate)phosphate. This application does not impose specific restrictions on a mass percentage of the lithium salt, as long as it achieves the objective of this application. For example, based on the mass of the electrolyte, the mass percentage of the lithium salt may be from 8% to 15%, such as 8%, 9%, 10%, 12%, 13%, 14%, 15%, or in a range composed of any two of these values.

The electrolyte of this application may further include a non-fluorinated cyclic ester. The non-fluorinated cyclic ester may include, but is not limited to, at least one of ethylene carbonate, vinylene carbonate, propylene carbonate, hexene carbonate, or octene carbonate. This application does not impose specific restrictions on a mass percentage of the

non-fluorinated cyclic ester, as long as it achieves the objective of this application. For example, based on the mass of the electrolyte, the mass percentage of the non-fluorinated cyclic ester may be from 0% to 45%, such as 0%, 5%, 10%, 15%, 20%, 25%, 30%, 35%, 40%, 45%, or in a range composed of any two of these values.

In some embodiments, the electrolyte includes a linear ester, a lithium salt, and a non-fluorinated cyclic ester, where mass percentages of the linear ester and lithium salt are as described above, and based on the mass of the electrolyte, a mass percentage of the non-fluorinated cyclic ester is from 10% to 45%. The electrochemical device including the above electrolyte has high ion transport capability, which can improve the cycling performance and rate performance of the electrochemical device.

In some embodiments, the electrolyte includes a linear ester, a lithium salt, and a compound represented by formula (I), optionally including a non-fluorinated cyclic ester. Mass percentages of the linear ester, lithium salt, and the compound represented by formula (I) are as described above, and based on the mass of the electrolyte, a mass percentage of the non-fluorinated cyclic ester is from 0% to 45%. The electrochemical device including the above electrolyte can adjust the solvation structure in the electrolyte, reduce the binding strength between the solvent and ions, and further improve the transport capability of ions in the electrolyte, thereby better improving the cycling performance and rate performance of the electrochemical device.

This application does not impose specific restrictions on the positive electrode tab and negative electrode tab, as long as they achieve the objective of this application. For example, the positive electrode tab may include either an aluminum electrode tab or an aluminum alloy electrode tab, and the negative electrode tab may include either a nickel electrode tab or a nickel-plated copper electrode tab.

This application does not impose specific restrictions on the thickness of the positive electrode plate, as long as it achieves the objective of this application. For example, the thickness of the positive electrode plate may be from 50 μm to 250 μm. This application does not impose specific restrictions on the positive electrode current collector, as long as it achieves the objective of this application. For example, it may include, but is not limited to, aluminum foil, aluminum alloy foil, or a composite current collector (for example, aluminum-carbon composite current collector). This application does not impose specific restrictions on the thicknesses of the positive electrode current collector and the positive electrode active material layer, as long as they achieve the objective of this application. For example, the thickness of the positive electrode current collector may be from 6 μm to 12 μm, and the thickness of the positive electrode active material layer may be from 30 μm to 120 μm. The positive electrode active material layer of this application includes a positive electrode active material, where the positive electrode active material includes a substance capable of reversibly intercalating and deintercalating active ions (for example, lithium ions). The positive electrode active material layer may be a single layer or multiple layers, and each layer in a multi-layer positive electrode active material layer may contain the same or different positive electrode active materials. This application does not impose specific restrictions on the positive electrode active material, as long as it achieves the objective of this application. For example, the positive electrode active material may include, but is not limited to, at least one of lithium nickel cobalt manganese oxide (for example, NCM811, NCM622, NCM523, NCM111), lithium nickel cobalt aluminate, lithium iron phosphate, lithium-rich manganese-based materials, lithium cobalt oxide ($LiCoO_2$), lithium manganese oxide, lithium manganese iron phosphate, or lithium titanate. In this application, the surface of the positive electrode active material may be attached with a substance different from the composition of the positive electrode active material. For example, the substance attached to the surface may include, but is not limited to, at least one of aluminum oxide, silicon dioxide, titanium dioxide, zirconium oxide, magnesium oxide, calcium oxide, boron oxide, antimony oxide, bismuth oxide, lithium sulfate, sodium sulfate, potassium sulfate, magnesium sulfate, calcium sulfate, aluminum sulfate, lithium carbonate, calcium carbonate, magnesium carbonate, or carbon. By attaching the above substances to the surface of the positive electrode active material, the oxidation reaction of the electrolyte on the surface of the positive electrode active material can be suppressed, thereby improving the service life of the electrochemical device.

The positive electrode active material layer may further include a positive conductive agent and a binder. This application does not impose specific restrictions on the types of the positive conductive agent and binder, as long as they achieve the objective of this application. For example, the binder may include, but is not limited to, at least one of polyvinyl alcohol, hydroxypropyl cellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, styrene-butadiene rubber, acrylic-modified styrene-butadiene rubber, epoxy resin, or nylon. The positive conductive agent may include, but is not limited to, at least one of a carbon-based material, a metal-based material, or a conductive polymer. For example, the carbon-based material may include at least one of natural graphite, artificial graphite, conductive carbon black (Super P), or carbon fiber. The metal-based materials may include, but is not limited to, at least one of metal powder, metal fiber, copper, nickel, aluminum, or silver. The conductive polymer may include, but is not limited to, polyphenylene derivatives. This application does not impose specific restrictions on a mass ratio of the positive electrode active material, positive conductive agent, and binder in the positive electrode active material layer, which can be selected based on actual needs, as long as it achieves the objective of this application.

This application does not impose specific restrictions on the thickness of the negative electrode plate, as long as it

achieves the objective of this application. For example, the thickness of the negative electrode plate may be from 50 μm to 250 μm. This application does not impose specific restrictions on the negative electrode current collector, as long as it achieves the objective of this application. For example, it may include, but is not limited to, copper foil, copper alloy foil, nickel foil, stainless steel foil, titanium foil, nickel foam, copper foam, or a composite current collector (for example, carbon-copper composite current collector, nickel-copper composite current collector, or titanium-copper composite current collector). In this application, there are no specific restrictions on the thicknesses of the negative electrode current collector and the negative electrode active material layer, as long as they achieve the objective of this application. For example, the thickness of the negative electrode current collector may be from 6 μm to 12 μm, and the thickness of the negative electrode active material layer may be from 30 μm to 120 μm. The negative electrode active material layer of this application includes a negative electrode active material, and the negative electrode active material layer may be a single layer or multiple layers, with each layer in a multi-layer negative electrode active material layer containing the same or different negative electrode active materials. The negative electrode active material is any substance capable of reversibly intercalating and deintercalating active ions such as lithium ions. The negative electrode active material may include, but is not limited to, at least one of natural graphite, artificial graphite, mesocarbon microbeads (MCMB), hard carbon, soft carbon, silicon, silicon-carbon composite, $SiO_x$ ($0.5 < x < 1.6$), Li-Sn alloy, Li-Sn-O alloy, Sn, SnO, $SnO_2$, spinel-structured lithium titanate, lithiated $TiO_2Li_4Ti_5O_{12}$, Li-Al alloy, or metallic lithium.

The negative electrode active material layer of this application may further include a binder, a negative conductive agent, or a thickener. This application does not impose specific restrictions on the types of the binder and negative conductive agent, as long as they achieve the objective of this application. For example, they may include, but are not limited to, at least one of the optional substances for the positive electrode active material layer described above. This application does not impose specific restrictions on the type of thickener, as long as it achieves the objective of this application. For example, the thickener may include, but is not limited to, carboxymethyl cellulose or sodium carboxymethyl cellulose. The negative electrode plate may further include a conductive layer located between the negative electrode current collector and the negative material layer. The composition of the conductive layer is not specifically limited and may be a conductive layer commonly used in the art. The conductive layer includes a conductive agent and a binder. This application does not impose specific restrictions on the types of the binder and conductive agent in the conductive layer, as long as they achieve the objective of this application. For example, they may include, but are not limited to, at least one of the optional substances for the positive electrode active material layer described above.

The electrode assembly of this application further includes a separator used to separate the positive electrode plate and the negative electrode plate, preventing internal short circuits in the electrochemical device, allowing free passage of electrolyte ions, and not affecting the electrochemical charge-discharge process. This application does not impose specific restrictions on the separator, as long as it achieves the objective of this application. For example, a material of the separator may include, but is not limited to, at least one of polyethylene (PE), polypropylene (PP)-based polyolefin (PO), polyester (for example, polyethylene terephthalate (PET) film), cellulose, polyimide (PI), polyamide (PA), spandex, or aramid. A type of separator may include at least one of woven membranes, non-woven membranes, microporous membranes, composite membranes, calendered membranes, or spun membranes. For example, the separator may include a substrate layer and a surface treatment layer. The substrate layer may be a non-woven fabric, membrane, or composite membrane with a porous structure, and a material of the substrate layer may include at least one of polyethylene, polypropylene, polyethylene terephthalate, or polyimide, optionally, may use a polypropylene porous membrane, polyethylene porous membrane, polypropylene non-woven fabric, polyethylene non-woven fabric, or polypropylene-polyethylene-polypropylene porous composite membrane. Optionally, the surface treatment layer is provided on at least one surface of the substrate layer, and the surface treatment layer may be a polymer layer, an inorganic layer, or a layer formed by mixing a polymer and an inorganic substance. For example, the inorganic layer includes inorganic particles and a binder. This application does not impose specific restrictions on the inorganic particles, which may include, for example, at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. This application does not impose specific restrictions on the binder, which may include, for example, at least one of the binders described above. The polymer layer contains a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene). In this application, a thickness of the separator is not specifically limited, as long as it achieves the objective of this application. For example, the thickness of the separator may be from 5 μm to 500 μm.

The electrochemical device of this application is not specifically limited and may include any device in which an electrochemical reaction occurs. In some embodiments, the electrochemical device may include, but is not limited to, lithium metal secondary batteries, lithium-ion secondary batteries (lithium-ion batteries), lithium polymer secondary batteries, or lithium-ion polymer secondary batteries.

The preparation process of the electrochemical device of this application is well known to those skilled in the art, and this application does not impose specific restrictions. For example, it may include, but is not limited to, the following

steps: a positive electrode plate, a separator, and a negative electrode plate are stacked in sequence, an electrode tab is welded, an electrode tab sealant and insulating tape are attached, and operations such as winding or folding are performed as needed to obtain an electrode assembly with a wound structure. The electrode assembly is placed in a packaging pouch, an electrolyte is injected into the packaging pouch, and the pouch is sealed to obtain the electrochemical device. Alternatively, a positive electrode plate, a separator, and a negative electrode plate are stacked in sequence, an electrode tab is welded, an electrode tab sealant and insulating tape are attached, and four corners of the entire stacked structure are fixed with tape to obtain an electrode assembly with a stacked structure. The electrode assembly is placed in a packaging pouch, an electrolyte is injected into the packaging pouch, and the pouch is sealed to obtain the electrochemical device. Additionally, components such as an overcurrent protection element or a guide plate may be placed in the packaging pouch as needed to prevent internal pressure rise or overcharge/discharge in the electrochemical device.

A second aspect of this application provides an electronic device, where electronic device includes the electrochemical device according to the first aspect of this application. The electrochemical device according to this application has excellent cycling performance and rate performance, thereby resulting in a longer service life for the electronic device of this application.

The electronic device of this application is not specifically limited and may be any electronic device known in the prior art. In some embodiments, the electronic device may include, but is not limited to, a notebook computer, a pen-input computer, a mobile computer, an e-book reader, a portable phone, a portable fax machine, a portable copier, a portable printer, a head-mounted stereo headphone, a video recorder, a liquid crystal display television, a portable cleaner, a portable CD player, a mini-disc player, a transceiver, an electronic notebook, a calculator, a memory card, a portable recorder, a radio, a backup power supply, a motor, an automobile, a motorcycle, an electric bicycle, a bicycle, a lighting fixture, a toy, a gaming console, a clock, a power tool, a flashlight, a camera, a large household battery, and a lithium-ion capacitor.

**Examples**

Some examples and comparative examples below are provided to describe some embodiments of this application in more detail. Various tests and evaluations are conducted according to the methods described below. Unless otherwise specified, "parts" and "%" are based on mass.

**Test methods and equipment:**

**Cycling performance test:**

The cycling performance of lithium-ion batteries is evaluated by the capacity retention rate after 400 cycles at 45°C. A higher capacity retention rate after 400 cycles at 45°C indicates better cycling performance of the lithium-ion battery.

The lithium-ion battery was placed in a 45°C thermostat for 30 minutes to reach a constant temperature. The lithium-ion battery at constant temperature was charged at 45°C at 0.2C constant current to 4.5 V, charged at 4.5 V constant voltage until the current was 0.05C, rested for 5 minutes, then discharged at 0.2C constant current to 3.0 V, rested for 5 minutes, and the initial discharge capacity $C_0$ of the lithium-ion battery was tested. Next, the lithium-ion battery was charged at 1.3C constant current to 4.15 V, charged at 4.15 V constant voltage until the current is 1C; charged at 1C constant current to 4.25 V, then charged at 4.25 V constant voltage until the current is 0.8C; charged at 0.8C constant current to 4.5 V, then charged at 4.5 V constant voltage until the current is 0.05C; rested for 5 minutes; and then discharged at 1C constant current to 3.0 V, rested for 5 minutes, completing one charge-discharge cycle. The above charge-discharge cycle steps were repeated for 400 cycles, and the discharge capacity C' after 400 cycles of the lithium-ion battery was measured.

$$\text{Capacity retention rate after 400 cycles at 45°C} = C'/C_0 \times 100\%.$$

**Rate discharge capacity ratio test:**

The lithium-ion battery was placed in a 25°C thermostat for 1 hour to reach a constant temperature. It was charged at 0.5C constant current to 4.2 V, then charged at 0.3C constant current to 4.5 V, charged at 4.5 V constant voltage until the current was 0.02C, rested for 30 minutes; and then discharged at 0.2C constant current to 3.0 V, rested for 30 minutes. The capacity ($D_0$ in this step was used as the baseline. At 25°C, it was charged at 0.5C constant current to 4.2 V, then charged at 0.3C constant current to 4.5 V, charged at 4.5 V constant voltage until the current was 0.02C, rested for 30 minutes; and then discharged at different rates of 0.5C/1C/2C constant current to 3.0 V. The capacities at different rates

were recorded as $D_x$ (x is 0.5, 1, or 2). Rate discharge capacity ratio = $D_x/D_0 \times 100\%$.

**Test of components in electrolyte and their contents:**

After the lithium-ion battery was discharged at 1C constant current to 3.0 V, the lithium-ion battery was disassembled, and the electrolyte was collected. The positive electrode plate, the negative electrode plate, and the separator were centrifuged, and the liquid obtained after centrifugation was mixed into uniformity with the collected electrolyte. The mixture was then tested using a gas chromatographymass spectrometry instrument (model: Agilent 8890) and ion chromatography (model: AQUION ion chromatography) to determine the components in the electrolyte and their contents.

**Example 1-1**

<Electrode tab sealant>

The electrode tab sealant was a single-layer adhesive including polypropylene, with a melting point of 150°C.

<Preparation of positive electrode plate>

A positive electrode active material lithium cobalt oxide ($LiCoO_2$), a positive conductive agent conductive carbon black (Super P), and a binder polyvinylidene fluoride (PVDF) were mixed at a mass ratio of 97.5:1:1.5, and NMP was added as a solvent. The mixture was stirred into uniformity under a vacuum mixer to obtain a positive slurry with a solid content of 75wt%. The positive slurry was evenly applied on one surface of a 10 μm thick positive electrode current collector aluminum foil, dried at 85°C to obtain a positive electrode plate with a single-sided positive electrode active material layer thickness of 50 μm. The above steps were repeated on the other surface of the aluminum foil to obtain a positive electrode plate with double-sided positive electrode active material layers. After cold pressing, cutting, and welding a positive electrode tab (aluminum electrode tab), a positive electrode plate with specifications of 74 mm × 851 mm was obtained for use. The positive electrode tab was adhered with the above electrode tab sealant, and dimensions of the positive electrode tab were 5 mm × 40 mm × 0.4 mm (direction X × direction Y × direction Z). The dimensions of the electrode tab sealant adhered to the positive electrode tab were 9.4 mm × 10 mm × 80 μm (direction X × direction Y × direction Z). As shown in FIG. 1, widths by which the electrode tab sealant exceeded two sides of the positive electrode tab were $A_1$ mm and $A_2$ mm, respectively, where $A_1$ = 2.2 and $A_2$ = 2.2.

<Preparation of negative electrode plate>

A negative electrode active material graphite, a negative conductive agent Super P, a thickener carboxymethyl cellulose, and a binder styrene-butadiene rubber (SBR) were mixed at a mass ratio of 97.5:1:0.5:1, and deionized water is added as a solvent. The mixture was stirred into uniformity under a vacuum mixer to obtain a negative slurry with a solid content of 50wt%. The negative slurry was evenly applied on one surface of an 8 μm thick negative electrode current collector copper foil, dried at 85°C to obtain a negative electrode plate with a single-sided negative electrode active material layer thickness of 60 μm. The above steps were repeated on the other surface of the copper foil to obtain a negative electrode plate with double-sided negative electrode active material layers. After cold pressing, cutting, and welding a negative electrode tab (nickel electrode tab), a negative electrode plate with specifications of 76 mm × 867 mm was obtained for use. The negative electrode tab was adhered with the above electrode tab sealant, and dimensions of the negative electrode tab were 5 mm × 40 mm × 0.4 mm (direction X × direction Y × direction Z). The dimensions of the electrode tab sealant were 9.4 mm × 10 mm × 80 μm (direction X ×direction Y ×direction Z). As shown in FIG. 1, widths by which the electrode tab sealant exceeded two sides of the negative electrode tab were $A_3$ mm and $A_4$ mm, respectively, where $A_3$ = 2.2 and $A_4$ = 2.2.

<Preparation of electrolyte>

In an environment with a water content of less than 10 ppm, the solvents linear ester diethyl carbonate (DEC), propyl acetate (EP), propyl propionate (PP), and non-fluorinated cyclic esters propylene carbonate (PC) and ethylene carbonate (EC) were mixed. Lithium salt $LiPF_6$ was then added to the solvent, dissolved, and mixed into uniformity to obtain an electrolyte. Based on a mass of the electrolyte, a mass percentage of DEC was $N_{DEC}$ = 20%, a mass percentage of EP was $N_{EP}$ = 20%, a mass percentage of PP was $N_{PP}$ = 20%, a mass percentage of PC was $N_{PC}$ = 20%, a mass percentage of EC was $N_{EC}$ = 10%, and a mass percentage of $LiPF_6$ as 10%. A mass ratio of DEC:EP:PP was 1:1:1, a mass ratio of PC:EC was 2:1, a mass percentage of the linear ester B% was 60%, and a mass percentage of the non-fluorinated

cyclic ester was 30%.

<Separator>

A polyethylene film with a thickness of 15 μm (manufacturer: Sinoma (Changde) Lithium Battery Separator Co., Ltd.) was used.

<Preparation of lithium-ion battery>

The prepared negative electrode plate, separator, and positive electrode plate were stacked and wound in sequence to obtain an electrode assembly with a wound structure. The electrode assembly was placed in an aluminum-plastic film pouch, dried, and injected with the electrolyte. After vacuum encapsulation, resting, formation, capacity testing, degassing, and trimming, a lithium-ion battery was obtained.

As shown in FIG. 1, along direction X, the width of the electrode tab sealant exceeded the maximum width of the electrode tab by A = 2.2 mm, and the sealing width of the top sealing edge D was 1.4 mm.

As shown in FIG. 2 and FIG. 3, at the positions where the insulating tape was adhered, a tape with a substrate layer of polyethylene terephthalate and an adhesive layer of polypropylene, with a melting point of 250°C, was used as both the insulating tape and the protective tape. The tape was adhered at the positions of the first insulating tape 51, second insulating tape 52, first protective tape 61, and second protective tape 62, as shown in FIG. 2, as well as third insulating tape 53, fourth insulating tape 54, third protective tape 63, and fourth protective tape 64, as shown in FIG. 3. The dimensions of the insulating tape and protective tape were each 10 mm × 30 mm × 75 μm (direction X ×direction Y ×direction Z), with the substrate layer thickness being 40 μm and the adhesive layer thickness being 35 μm.

**Examples 1-2 and 1-3**

The same as Example 1-1, except that the width of the electrode tab sealant along direction X was changed while the width of the electrode tab along direction X was kept unchanged, resulting in the values of A as shown in Table 1.

**Examples 1-4 to 1-8**

The same as Example 1-1, except that the values of A and the mass percentage B% of the linear ester were adjusted as shown in Table 1, the mass percentage of the non-fluorinated cyclic ester was changed accordingly, while the mass ratio of the linear ester DEC:EP:EC, the mass ratio of the non-fluorinated cyclic ester PC:EC, and the mass percentage of the lithium salt were kept unchanged.

**Examples 2-1 to 2-5**

The same as Example 1-1, except that the material of the electrode tab sealant was adjusted as shown in Table 2, resulting in the melting point of the electrode tab sealant as shown in Table 2.

**Examples 3-1 to 3-4**

The same as Example 1-1, except that the sealing width of the top sealing edge was adjusted as shown in Table 3.

**Examples 4-1 to 4-4**

The same as Example 1-1, except that the type and mass percentage of the linear ester were adjusted as shown in Table 4.

**Examples 5-1 to 5-11**

The same as Example 1-1, except that a compound represented by formula (I) was further introduced, the type and mass percentage C% of the compound represented by formula (I) were adjusted as shown in Table 5, the mass percentage of the non-fluorinated cyclic ester was changed accordingly, while the mass ratio of the non-fluorinated cyclic ester PC:EC, the mass ratio of the linear ester DEC:EP:EC, the mass percentage B% of the linear ester, and the mass percentage of the lithium salt were kept unchanged.

**Example 6-1**

The same as Example 1-1, except that the material of the substrate layer was adjusted as shown in Table 6, resulting in the melting point of the insulating tape as shown in Table 6.

**Comparative Example 1-1**

The same as Example 1-1, except that the value of A was adjusted as shown in Table 1.

**Comparative Examples 1-2 and 1-3**

The same as Example 1-1, except that the values of A and the mass percentage B% of the linear ester were adjusted as shown in Table 1, the mass percentage of the non-fluorinated cyclic ester was changed accordingly, while the mass ratio of the linear ester DEC:EP:EC, the mass ratio of the non-fluorinated cyclic ester PC:EC, and the mass percentage of the lithium salt were kept unchanged.

The preparation parameters and performance parameters of examples and comparative examples are shown in Tables 1 to 6.

**Table 1**

| | A (mm) | B (%) | A/B | Capacity retention rate after 400 cycles at 45°C (%) | 0.5C rate discharge capacity ratio (%) | 1C rate discharge capacity ratio (%) | 2C rate discharge capacity ratio (%) |
|---|---|---|---|---|---|---|---|
| Example 1-1 | 2.2 | 60 | 0.0368 | 83.1 | 98.1 | 97.1 | 95.8 |
| Example 1-2 | 1.8 | 60 | 0.03 | 84.2 | 98.2 | 97.2 | 96.0 |
| Example 1-3 | 2.6 | 60 | 0.0433 | 82.7 | 98.0 | 97.1 | 95.5 |
| Example 1-4 | 2.2 | 45 | 0.0488 | 86.5 | 97.6 | 96.4 | 94.8 |
| Example 1-5 | 2.2 | 75 | 0.0293 | 80 | 98.5 | 97.6 | 96.7 |
| Example 1-6 | 1.8 | 75 | 0.024 | 81.2 | 98.7 | 97.9 | 96.9 |
| Example 1-7 | 2.6 | 45 | 0.0577 | 80.6 | 97.7 | 96.5 | 94.7 |
| Example 1-8 | 1.8 | 83.5 | 0.0215 | 74.2 | 98.9 | 98.1 | 97.4 |
| Comparative Example 1-1 | 3 | 60 | 0.05 | 61.3 | 97.4 | 96.5 | 94.9 |
| Comparative Example 1-2 | 1.8 | 90 | 0.02 | 53.2 | 99.1 | 98.2 | 97.6 |
| Comparative Example 1-3 | 2.2 | 35 | 0.0628 | 65.7 | 95.6 | 93.5 | 92.2 |

From Examples 1-1 to 1-8 and Comparative Examples 1-1 to 1-3, it can be seen that controlling the values of A and A/B within the ranges of this application results in lithium-ion batteries with higher capacity retention rates and 0.5C/1C/2C rate discharge capacity ratios, indicating better cycling performance and rate performance of the lithium-ion battery.

The value of A typically affects the cycling performance and rate performance of the lithium-ion battery. From Examples 1-1 to 1-3 and Comparative Example 1-1, it can be seen that when the value of A is too large, for example, in Comparative Example 1-1, the capacity retention rate and 0.5C/1C/2C rate discharge capacity ratios of the lithium-ion battery are too low. When the value of A is too small, the risk of electrolyte leakage in the lithium-ion battery increases. This indicates that when A is too large or too small, it is impossible to balance the cycling performance, rate performance, and safety performance of the lithium-ion battery. When A meets $1.8 \leq A \leq 2.6$, the lithium-ion battery can achieve higher capacity retention rates and 0.5C/1C/2C rate discharge capacity ratios, indicating that controlling the value of A within the range of this application can reduce the risk of electrolyte leakage while enabling the lithium-ion battery to have better cycling performance and rate performance.

The value of A/B typically affects the cycling performance and rate performance of the lithium-ion battery. From Examples 1-1 to 1-8 and Comparative Examples 1-2 to 1-3, it can be seen that when the value of A/B is too small, for example, in Comparative Example 1-2, although the 0.5C/1C/2C rate discharge capacity ratios of the lithium-ion battery

are relatively high, the capacity retention rate is low. When the value of A/B is too large, for example, in Comparative Example 1-3, both the capacity retention rate and the 0.5C/1C/2C rate discharge capacity ratios of the lithium-ion battery are too low. This indicates that when A/B is too large or too small, it is impossible to balance the cycling performance and rate performance of the lithium-ion battery. When A/B meets 0.0215 ≤ A/B ≤ 0.058, the lithium-ion battery can achieve higher capacity retention rates and 0.5C/1C/2C rate discharge capacity ratios, indicating that the lithium-ion battery has better cycling performance and rate performance.

The mass percentage B% of the linear ester typically affects the cycling performance and rate performance of the lithium-ion battery. From Examples 1-1 to 1-8, it can be seen that controlling the value of B within the range of this application results in lithium-ion batteries with higher capacity retention rates and 0.5C/1C/2C rate discharge capacity ratios, indicating that the lithium-ion battery has excellent cycling performance and rate performance.

**Table 2**

| | Material of electrode tab sealant | Melting point of electrode tab sealant (°C) | Capacity retention rate after 400 cycles at 45°C (%) | 0.5C rate discharge capacity ratio (%) | 1C rate discharge capacity ratio (%) | 2C rate discharge capacity ratio (%) |
|---|---|---|---|---|---|---|
| Example 1-1 | Polypropylene | 150 | 83.1 | 98.1 | 97.1 | 95.8 |
| Example 2-1 | Polyethylene | 110 | 81.2 | 97.5 | 96.9 | 95.5 |
| Example 2-2 | Polystyrene | 140 | 82.1 | 97.8 | 97 | 95.4 |
| Example 2-3 | Polyvinyl chloride | 180 | 83.6 | 98.5 | 97.5 | 96.4 |
| Example 2-4 | Acrylonitrile-butadiene-styrene copolymer | 200 | 83.4 | 98.4 | 97.3 | 96.2 |
| Example 2-5 | Polyethylene terephthalate | 250 | 82.3 | 97.3 | 96.3 | 95.1 |

The melting point and material type of the electrode tab sealant typically affect the cycling performance and rate performance of the lithium-ion battery. From Example 1-1 and Examples 2-1 to 2-5, it can be seen that selecting materials of the electrode tab sealant within the range of this application and adjusting the melting point of the electrode tab sealant within the range of this application result in lithium-ion batteries with higher capacity retention rates and 0.5C/1C/2C rate discharge capacity ratios, indicating that the lithium-ion battery has excellent cycling performance and rate performance.

**Table 3**

| | Sealing width of top sealing edge (mm) | Capacity retention rate after 400 cycles at 45°C (%) | 0.5C rate discharge capacity ratio (%) | 1C rate discharge capacity ratio (%) | 2C rate discharge capacity ratio (%) |
|---|---|---|---|---|---|
| Example 1-1 | 1.4 | 83.1 | 98.1 | 97.1 | 95.8 |
| Example 3-1 | 1 | 84.3 | 98.3 | 97.5 | 96.2 |
| Example 3-2 | 1.3 | 83.5 | 98.2 | 97.3 | 96.0 |
| Example 3-3 | 1.5 | 82.9 | 98.0 | 97.0 | 95.5 |
| Example 3-4 | 1.7 | 82.1 | 97.8 | 96.9 | 95.1 |

The sealing width of the top sealing edge typically affects the cycling performance and rate performance of the lithium-ion battery. From Example 1-1 and Examples 3-1 to 3-4, it can be seen that controlling the sealing width of the top sealing edge within the range of this application can reduce the risk of electrolyte leakage while enabling the lithium-ion battery to have higher capacity retention rates and 0.5C/1C/2C rate discharge capacity ratios, indicating that the lithium-ion battery has excellent cycling performance and rate performance.

**Table 4**

| | Type of linear ester | Mass percentage of linear ester | Capacity retention rate after 400 cycles at 45°C (%) | 0.5C rate discharge capacity ratio (%) | 1C rate discharge capacity ratio (%) | 2C rate discharge capacity ratio (%) |
|---|---|---|---|---|---|---|
| Example 1-1 | DEC + EP + PP | 20%+20%+ 20% | 83.1 | 98.1 | 97.1 | 95.8 |
| Example 4-1 | DEC + EP + bis(2,2,2-trifluoroethyl) carbonate | 20%+20%+ 20% | 85.8 | 96.0 | 95.4 | 93.7 |
| Example 4-2 | DEC + EP + 2,2-difluoroethyl methyl carbonate | 20%+20%+ 20% | 85.1 | 96.9 | 96.1 | 94.3 |
| Example 4-3 | DEC + EP + 2,2-difluoroethyl propionate | 20%+20%+ 20% | 84.5 | 97.4 | 96.5 | 95.0 |
| Example 4-4 | Dimethyl carbonate + methyl propionate + 2,2-difluoroethyl acetate | 20%+20%+ 20% | 79.1 | 98.7 | 97.7 | 96.8 |

The type of linear ester typically affects the cycling performance and rate performance of the lithium-ion battery. From Example 1-1 and Examples 4-1 to 4-4, it can be seen that selecting linear esters within the range of this application results in lithium-ion batteries with higher capacity retention rates and 0.5C/1C/2C rate discharge capacity ratios, indicating that the lithium-ion battery has excellent cycling performance and rate performance.

**Table 5**

| | Mass percentage of non-fluorinated cyclic ester (%) | Compound represented by formula (I) | C (%) | Capacity retention rate after 400 cycles at 45°C (%) | 0.5C rate discharge capacity ratio (%) | 1C rate discharge capacity ratio (%) | 2C rate discharge capacity ratio (%) |
|---|---|---|---|---|---|---|---|
| Example 1-1 | 30 | / | / | 83.1 | 98.1 | 97.1 | 95.8 |
| Example 5-1 | 25 | Formula (I-1) | 5 | 86.2 | 97.3 | 96 | 94.7 |
| Example 5-2 | 25 | Formula (I-2) | 5 | 86.1 | 97 | 95.9 | 94.4 |
| Example 5-3 | 25 | Formula (I-4) | 5 | 85.2 | 96.3 | 94.9 | 93.7 |
| Example 5-4 | 25 | Formula (I-6) | 5 | 85.1 | 97 | 95.7 | 94.3 |
| Example 5-5 | 25 | Formula (I-7) | 5 | 85.2 | 97.1 | 95.9 | 94.4 |
| Example 5-6 | 29 | Formula (I-1) | 1 | 83.7 | 98.0 | 96.9 | 95.5 |
| Example 5-7 | 27.5 | Formula (I-1) | 2.5 | 84.3 | 97.8 | 96.5 | 95.1 |
| Example 5-8 | 22 | Formula (I-1) | 8 | 87.5 | 97.0 | 95.2 | 94.0 |
| Example 5-9 | 20 | Formula (I-1) | 10 | 87.8 | 96.4 | 94.9 | 93.4 |
| Example 5-10 | 15 | Formula (I-1) | 15 | 87.9 | 96.0 | 94.1 | 92.4 |
| Example 5-11 | 10 | Formula (I-1) | 20 | 85.1 | 95.1 | 93.0 | 91.1 |
| Note: The "/" in Table 5 indicates the absence of the corresponding parameter or substance. | | | | | | | |

The type and mass percentage C% of the compound represented by formula (I) typically affect the cycling performance and rate performance of the lithium-ion battery. From Example 1-1 and Examples 5-1 to 5-11, it can be seen that the inclusion of linear esters in the electrolyte, along with further introducing compounds represented by formula (I), selecting compounds represented by formula (I) within the range of this application, and controlling their mass percentage C% within the range of this application, result in lithium-ion batteries with higher capacity retention rates and 0.5C/1C/2C rate discharge capacity ratios, indicating that the lithium-ion battery has excellent cycling performance and rate performance.

**Table 6**

| | Material of substrate layer | Material of adhesive layer | Melting point of insulating tape (°C) | Capacity retention rate after 400 cycles at 45°C (%) | 0.5C rate discharge capacity ratio (%) | 1C rate discharge capacity ratio (%) | 2C rate discharge capacity ratio (%) |
|---|---|---|---|---|---|---|---|
| Example 1-1 | Polyethylene terephthalate | Polypropylene | 250 | 83.1 | 98.1 | 97.1 | 95.8 |
| Example 6-1 | Polyimide | Polypropylene | 500 | 83.3 | 98.3 | 97.5 | 96.3 |

The melting point of the insulating tape typically affects the cycling performance and rate performance of the lithium-ion battery. From Example 1-1 and Example 6-1, it can be seen that controlling the melting point of the insulating tape within the range of this application results in lithium-ion batteries with higher capacity retention rates and 0.5C/1C/2C rate discharge capacity ratios, indicating that the lithium-ion battery has excellent cycling performance and rate performance.

It should be noted that in this specification, relational terms such as first and second are used solely to distinguish one entity or operation from another entity or operation without necessarily requiring or implying any actual relationship or order between such entities or operations. Moreover, the terms "comprise," "include," or any other variation thereof are intended to cover a non-exclusive inclusion, such that a process, method, or article that includes a series of elements not only includes those elements but also includes other elements not expressly listed or inherent to such process, method, or article.

The various embodiments in this specification are described in a related manner, and the same or similar parts among some embodiments can be referred to each other, with each embodiment focusing on the differences from the other embodiments.

The above descriptions are only preferred embodiments of this application and are not intended to limit this application. Any modifications, equivalent substitutions, improvements, or the like, made within the spirit and principles of this application shall be included within the scope of protection of this application.

## Claims

1. An electrochemical device, comprising an electrode assembly, an electrode tab, and an electrolyte, wherein an electrode tab sealant is provided on the electrode tab, and in a direction perpendicular to an extension direction of the electrode tab, a width of the electrode tab sealant exceeds a maximum width of the electrode tab by A mm, wherein $1.8 \leq A \leq 2.6$; and
   the electrolyte comprises a linear ester, wherein based on a mass of the electrolyte, a mass percentage of the linear ester is B%, with A/B meeting $0.0215 \leq A/B \leq 0.058$.

2. The electrochemical device according to claim 1, wherein $0.03 \leq A/B \leq 0.05$.

3. The electrochemical device according to claim 1, wherein a melting point of the electrode tab sealant is in a range of 110°C to 250°C.

4. The electrochemical device according to claim 1, wherein the electrode tab sealant comprises at least one selected from the group consisting of polypropylene, polyethylene, polyethylene-propylene copolymer, polystyrene, polyvinyl chloride, acrylonitrile-butadiene-styrene copolymer, polyethylene terephthalate, and polyethylene naphthalate.

5. The electrochemical device according to any one of claims 1 to 4, wherein the electrochemical device further comprises a packaging pouch, wherein the packaging pouch has a cavity, the electrode assembly and the electrolyte are disposed in the cavity, the packaging pouch comprises a top sealing edge, the top sealing edge seals the cavity, and the electrode tab is connected to the electrode assembly and extends out from the top sealing edge; and along the extension direction of the electrode tab, a sealing width of the top sealing edge is from 1.0 mm to 1.7 mm.

6. The electrochemical device according to claim 1, satisfying at least one of the following characteristics:

(1)

$$45 \leq B \leq 75;$$

or

(2) a melting point of the electrode tab sealant is from 140°C to 200°C.

7. The electrochemical device according to any one of claims 1 to 4, wherein the linear ester comprises at least one selected from the group consisting of non-fluorinated linear carbonate, non-fluorinated linear carboxylate, fluorinated linear carbonate, and fluorinated linear carboxylate; wherein

the non-fluorinated linear carbonate comprises at least one selected from the group consisting of dimethyl carbonate, ethyl methyl carbonate, and diethyl carbonate;
the non-fluorinated linear carboxylate comprises at least one selected from the group consisting of propyl propionate, ethyl propionate, ethyl acetate, and methyl propionate;
the fluorinated linear carbonate comprises at least one selected from the group consisting of bis(2,2,2-trifluoroethyl) carbonate, 2,2-difluoroethyl methyl carbonate, and 1,1,1-trifluoroethyl methyl carbonate; and
the fluorinated linear carboxylate comprises at least one selected from the group consisting of 2,2-difluoroethyl propionate and 2,2-difluoroethyl acetate.

8. The electrochemical device according to any one of claims 1 to 7, wherein the electrolyte further comprises a compound represented by formula (I),

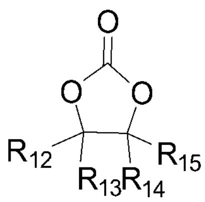

Formula (I)

wherein $R_{12}$, $R_{13}$, $R_{14}$, and $R_{15}$ are each independently selected from the group consisting H, F, $C_1$ to $C_{10}$ fluorinated alkyl, $C_1$ to $C_{10}$ fluorinated alkoxy, and $C_1$ to $C_{10}$ fluorinated alkoxyalkyl, and $R_{12}$, $R_{13}$, $R_{14}$, and $R_{15}$ are not simultaneously hydrogen atoms; and
based on the mass of the electrolyte, a mass percentage C% of the compound represented by formula (I) is from 1% to 15%.

9. The electrochemical device according to claim 8, wherein based on the mass of the electrolyte, the mass percentage C% of the compound represented by formula (I) is from 2.5% to 8%.

10. The electrochemical device according to claim 8, wherein the compound represented by formula (I) comprises at least one selected from the group consisting of the following compounds:

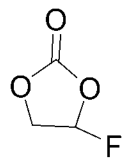
Formula (I-1)

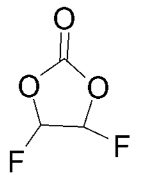
Formula (I-2)

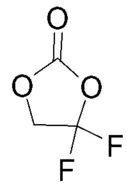
Formula (I-3)

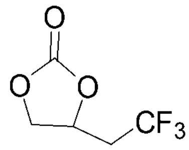
Formula (I-4)

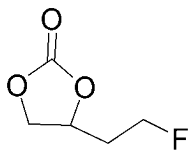
Formula (I-5)

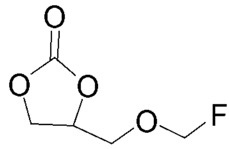
Formula (I-6)

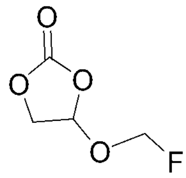
Formula (I-7).

**11.** The electrochemical device according to any one of claims 1 to 10, wherein the electrode tab comprises a positive electrode tab and a negative electrode tab; and the electrode assembly comprises a positive electrode plate and a negative electrode plate; wherein

the positive electrode plate comprises a positive electrode current collector and a positive electrode active material layer disposed on at least one surface of the positive electrode current collector, the positive electrode active material layer is provided with a first groove exposing the positive electrode current collector, the positive electrode tab is disposed in the first groove and connected to the positive electrode current collector, and an insulating tape is provided on a surface of the positive electrode tab and on a region of a surface of the positive electrode plate facing away from the positive electrode tab and corresponding to the first groove;

the negative electrode plate comprises a negative electrode current collector and a negative electrode active material layer disposed on at least one surface of the negative electrode current collector, the negative electrode active material layer is provided with a second groove exposing the negative electrode current collector, the negative electrode tab is disposed in the second groove and connected to the negative electrode current collector, a region of a surface of the negative electrode plate facing away from the negative electrode tab and corresponding to the second groove is designated as an electrode tab protection region, and the insulating tape is provided on regions of surfaces of the positive electrode plate opposite the second groove and opposite the electrode tab protection region; and

a melting point of the insulating tape ranges from 250°C to 600°C.

**12.** The electrochemical device according to claim 11, wherein the insulating tape comprises a substrate layer and an adhesive layer disposed on one surface of the substrate layer; wherein

the substrate layer comprises at least one selected from the group consisting of polyethylene terephthalate and polyimide; and the adhesive layer comprises at least one selected from the group consisting of polypropylene, polyvinyl chloride, acrylonitrile-butadiene-styrene copolymer, and polyethylene terephthalate.

**13.** An electronic device, wherein the electronic device comprises the electrochemical device according to any one of claims 1 to 12.

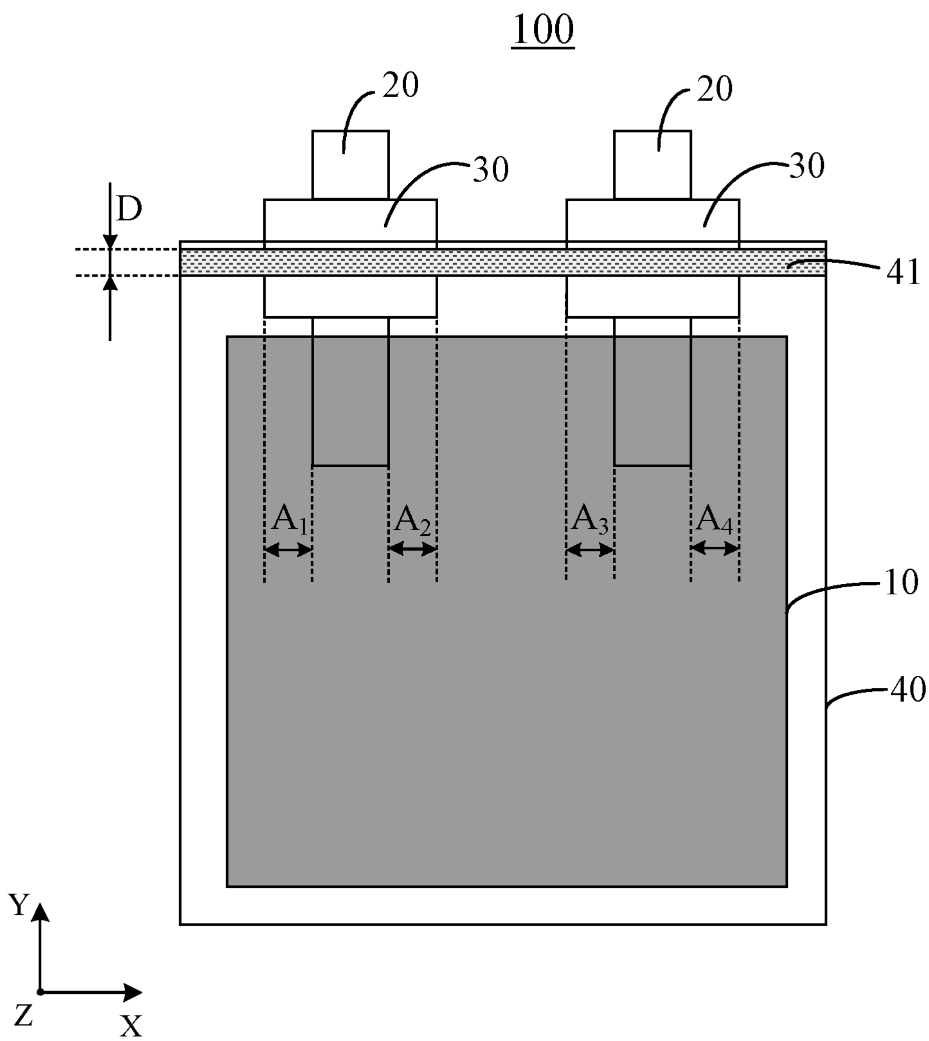


FIG. 1

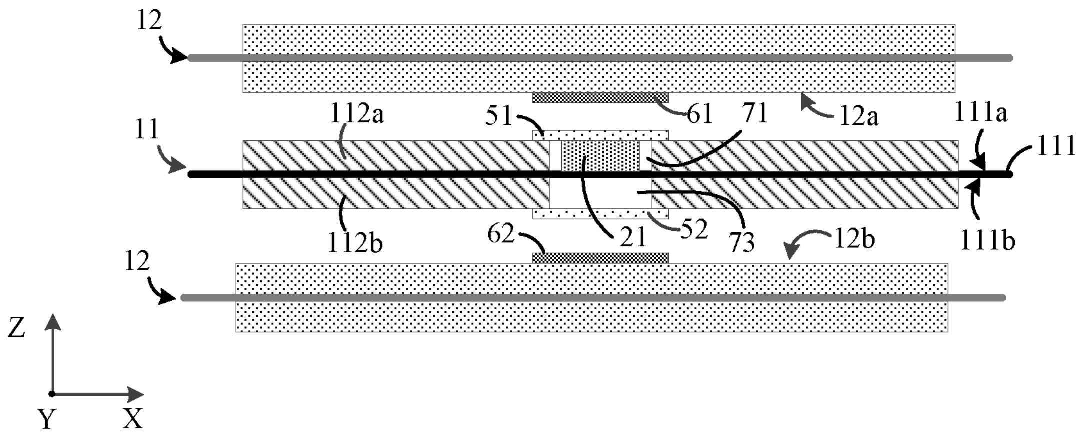
12
11
112a
51
61
71
12a
111a
111
112b
62
21
52
73
12b
111b
12
Z
Y
X

FIG. 2

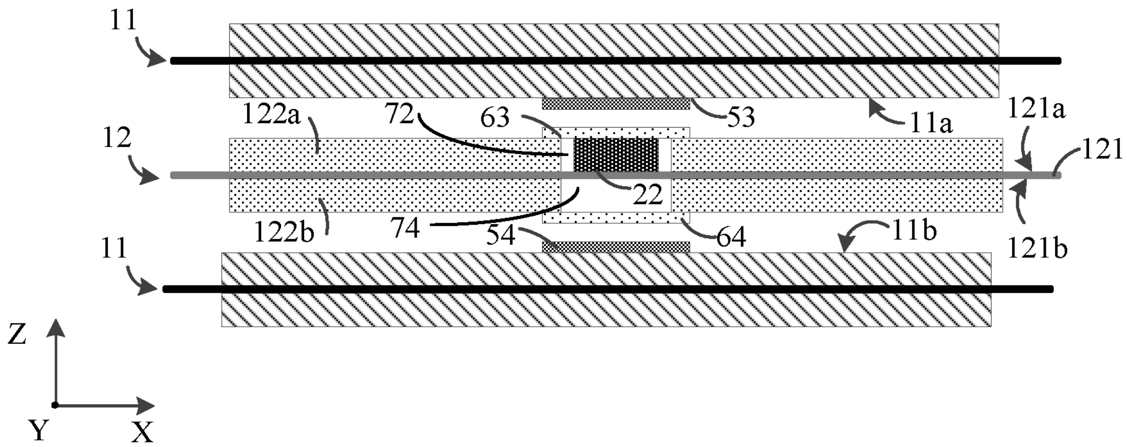
11
122a
72
63
53
11a
121a
12
121
22
122b
74
54
64
11b
121b
11
Z
Y
X

FIG. 3

## INTERNATIONAL SEARCH REPORT

International application No.
**PCT/CN2024/103543**

**A. CLASSIFICATION OF SUBJECT MATTER**

H01M50/184(2021.01)i; H01M50/186(2021.01)i; H01M50/531(2021.01)i; H01M10/0567(2010.01)i; H01M10/0525(2010.01)i; H01M10/42(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, ENTXT, DWPI, ISI web of science, CJFD, 读秀, DUXIU: 宁德新能源, 极耳, 密封, 胶, 肩宽, 宽度, 电解液, lug+, seal+, glue, width, shoulder, electrolyte solution

**C. DOCUMENTS CONSIDERED TO BE RELEVANT**

| Category* | Citation of document, with indication, where appropriate, of the relevant passages | Relevant to claim No. |
|---|---|---|
| PX | CN 117219936 A (NINGDE AMPEREX TECHNOLOGY LTD.) 12 December 2023 (2023-12-12)<br>claims 1-13 | 1-13 |
| X | WO 2023159583 A1 (NINGDE AMPEREX TECHNOLOGY LTD.) 31 August 2023 (2023-08-31)<br>description, page 3, paragraphs 4-6 and 8, page 9, paragraphs 3 and 5, page 12, paragraphs 2 and 5, and figures 1-6 | 1-2, 6-10, 13 |
| Y | WO 2023159583 A1 (NINGDE AMPEREX TECHNOLOGY LTD.) 31 August 2023 (2023-08-31)<br>description, page 3, paragraphs 4-6 and 8, page 9, paragraphs 3 and 5, page 12, paragraphs 2 and 5, and figures 1-6 | 3-5, 11-12 |
| Y | CN 114156607 A (NINGDE AMPEREX TECHNOLOGY LTD.) 08 March 2022 (2022-03-08)<br>description, paragraphs 0076 and 0089 | 3-5 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 September 2024** | **23 September 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2024/103543**

**C. DOCUMENTS CONSIDERED TO BE RELEVANT**

| Category* | Citation of document, with indication, where appropriate, of the relevant passages | Relevant to claim No. |
|---|---|---|
| Y | CN 115692599 A (HUIZHOU LIWINON NEW ENERGY TECHNOLOGY CO., LTD.) 03 February 2023 (2023-02-03) description, paragraph 0031 | 11-12 |
| A | CN 114497872 A (NINGDE AMPEREX TECHNOLOGY LTD.) 13 May 2022 (2022-05-13) entire document | 1-13 |
| A | CN 116134636 A (NINGDE AMPEREX TECHNOLOGY LTD.) 16 May 2023 (2023-05-16) entire document | 1-13 |

Form PCT/ISA/210 (second sheet) (July 2022)

**INTERNATIONAL SEARCH REPORT**
**Information on patent family members**

International application No.
**PCT/CN2024/103543**

| Patent document cited in search report | Publication date (day/month/year) | Patent family member(s) | Publication date (day/month/year) |
|---|---|---|---|
| CN 117219936 A | 12 December 2023 | None | |
| WO 2023159583 A1 | 31 August 2023 | CN 116868403 A | 10 October 2023 |
| CN 114156607 A | 08 March 2022 | None | |
| CN 115692599 A | 03 February 2023 | None | |
| CN 114497872 A | 13 May 2022 | EP 4220826 A1 | 02 August 2023 |
| CN 116134636 A | 16 May 2023 | WO 2023173291 A1 | 21 September 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311125229